(19) Europäisches Patentamt
European Patent Office
Office européen des brevets

(11) **EP 3 446 087 B1**

(12) **EUROPÄISCHE PATENTSCHRIFT**

(45) Veröffentlichungstag und Bekanntmachung des Hinweises auf die Patenterteilung:
**28.10.2020 Patentblatt 2020/44**

(51) Int Cl.:
***G01K 17/20*** *(2006.01)*

(21) Anmeldenummer: **17722385.6**

(22) Anmeldetag: **19.04.2017**

(86) Internationale Anmeldenummer:
**PCT/EP2017/059263**

(87) Internationale Veröffentlichungsnummer:
**WO 2017/182507 (26.10.2017 Gazette 2017/43)**

(54) **VORRICHTUNG UND VERFAHREN ZUR BESTIMMUNG DES KONVEKTIVEN WÄRMEÜBERGANGSKOEFFIZIENTEN**

DEVICE AND METHOD FOR DETERMINING THE CONVECTIVE HEAT TRANSFER COEFFICIENT

DISPOSITIF ET PROCÉDÉ POUR DETERMINER LE COEFFICIENT DE TRANSFERT THERMIQUE CONVECTIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.04.2016 DE 102016107212**

(43) Veröffentlichungstag der Anmeldung:
**27.02.2019 Patentblatt 2019/09**

(73) Patentinhaber: **Fraunhofer-Gesellschaft zur Förderung der angewandten Forschung e.V.
80686 München (DE)**

(72) Erfinder:
• **MAYER, Erhard**
  **83607 Holzkirchen (DE)**
• **VISSER, Michael**
  **83607 Holzkirchen (DE)**

(56) Entgegenhaltungen:
**EP-A1- 0 025 049    EP-A1- 1 684 065
EP-A2- 2 530 443**

EP 3 446 087 B1

**Beschreibung**

Die Anmeldung betrifft eine Vorrichtung und ein Verfahren zur Bestimmung des konvektiven Wärmeübergangskoeffizienten an einer angeströmten Fläche. Damit kann auch die Geschwindigkeit und/oder Turbulenz einer Strömung an der Fläche bestimmt werden.

Aus der DE 10 2013 206 406 A1 ist ein Raumklimamessgerät bekannt. Dieses enthält zumindest eine Messfläche, welcher ein Wärmestrom zuführbar ist. Die Messfläche ist dazu eingerichtet, Wärme durch Konvektion und/oder Strahlung an ihre Umgebung abzugeben. Dabei ist die sich einstellende Temperatur der Messfläche bestimmbar. Der Wärmestrom ist mit einem Heizwiderstand erzeugbar. Weiterhin ist eine Wärmestromerfassungseinrichtung vorhanden, um den der Messfläche zugeführten Wärmestrom zu bestimmen. Das Raumklimamessgerät eignet sich gut zur Erfassung des für die Behaglichkeit von Personen relevanten Raumklimas.

Bekannt sind auch Anemometer, die thermisch arbeiten. Dazu wird ein elektrisch beheiztes Sensorelement verwendet, dessen elektrischer Widerstand von der Temperatur abhängt. Die am Sensorelement vorbeiströmende Strömung sorgt für einen Wärmetransport in die Umgebung. Durch Messung der elektrischen Größen kann so auf die Strömungsgeschwindigkeit geschlossen werden. Eine wichtige Ausführungsform des Sensorelements ist ein beheizter Draht zur Ausbildung eines sogenannten Hitzdrahtanemometers. Wenn man so will, wird dabei auch der konvektive Wärmeübergang bestimmt. Denkbar wären auch beheizte Flächen. Nachteilig daran ist, dass mitunter eine aufwändige Regelung und eine Beheizung der Fläche erforderlich sind.

Aus der US 4,653,934 A ist eine Vorrichtung zur Bestimmung des konvektiven Wärmeübergangskoeffizienten bekannt. Diese weist einen Sensor auf mit dem die Temperatur an einer Fläche bestimmt werden kann und einen weiteren Sensor mit dem die Temperatur in der Umgebung bestimmt werden kann.

Aus einer Recherche in Kenntnis der Erfindung sind ferner die Schriften DD 244 199 B3, US2004/0136434 A1 und GB 2 395 561 A als weiterer Stand der Technik bekannt geworden.

Aus der EP 0 025 049 A1 und aus der EP 1 684 065 A1 ist es bekannt die Temperatur im Innern eines Gebäudes und in der Umgebung zu messen. Ferner kann die Temperatur an der Oberfläche der Innenwand gemessen werden. Da im stationären Zustand der Wärmestrom durch die Wand gleich dem durch Konvektion vom Inneren des Gebäudes an die Wand übertragenem Wärmestrom ist, kann bei bekanntem U-Wert der Wand der konvektive Wärmeübergangskoeffizient mit Hilfe der vorgenannten Temperaturen berechnet werden.

Aus der EP 2 530 443 A2 ist eine Anordnung mit einer Wärmebildkamera bekannt. Es wird die Temperatur auf der äußeren Wandoberfläche eines Gebäudes bestimmt, eine Temperatur auf der Oberfläche eines am Gebäudes angebrachten Testkörpers und eine Temperatur fern vom Gebäude bestimmt. Kennt man den Wärmewiderstand des Testkörpers lässt sich mit Hilfe der Temperaturen der Wärmeübergangskoeffizient für konvektiven Wärmeübergang und Strahlungswärmeübergang ermitteln.

Aufgabe der vorliegenden Erfindung ist es eine einfache und verlässliche Vorrichtung zur Messung des konvektiven Wärmeübergangskoeffizienten an einer Fläche zu schaffen.

Erfindungsgemäß ist eine Vorrichtung zur Bestimmung des konvektiven Wärmeübergangskoeffizienten an einer Konvektionsfläche vorgesehen, wobei eine erste Temperaturdifferenz zwischen der Oberflächentemperatur der Konvektionsfläche und der Umgebungsfluidtemperatur und eine zweite Temperaturdifferenz zwischen einer Temperatur im Nahbereich der Konvektionsfläche und der Umgebungsfluidtemperatur bestimmbar sind. Der Nahbereich liegt dabei derart nahe der Konvektionsfläche, dass die Temperatur von der Konvektionsfläche durch Konvektion merklich beeinflusst ist.

Zunächst soll klargestellt werden, dass es sich bei der Umgebung um den mit einem ruhenden oder strömenden Fluid gefüllten Raum handelt. Im Regelfall handelt es sich um Luft oder ein anderes Gas oder Gasgemisch. Daher beziehen sich die nachfolgenden Ausführungen auf die Messung des konvektiven Wärmeübergangskoeffizienten bei Luftströmungen. Erste Messungen an Wasser haben aber gezeigt, dass auch die Messung des konvektiven Wärmeübergangskoeffizienten in Flüssigkeiten möglich ist. Die Hauptanwendung dürfte die Bestimmung der konvektiven Wärmeabgabe an vorbeiströmende Luft oder die konvektive Wärmeaufnahme von vorbeiströmender Luft sein. Es soll von vorbeiströmender Luft auch dann gesprochen werden, wenn eigentlich die Konvektionsfläche sich bewegt und die Luft ruht oder weitgehend ruht. Im Interesse der Anschaulichkeit wird von Luft gesprochen. Dies soll andere Fluide aber nicht ausschließen.

Unter der Umgebungsfluidtemperatur ist die Temperatur des Fluids in einem Bereich zu verstehen, in dem die Temperatur des Fluids nicht von der Konvektionsfläche beeinflusst ist, jedenfalls nicht durch Konvektion.

An dieser Stelle sollen die thermodynamischen Zusammenhänge kurz dargestellt werden. Die gesamte konvektive Wärmestromdichte q von der Oberfläche in die Umgebung ist $q = h_c(T_O - T_U)$ wobei $T_O$ die Oberflächentemperatur der Konvektionsfläche und $T_U$ die Umgebungsfluidtemperatur ist. Der konvektive Wärmeübergangskoeffizient ist mit $h_c$ bezeichnet.

Dies ist auch gleich der Ableitung der Temperatur am Ort x=0, also in der Grenzschicht, multipliziert mit der Wärmeleitfähigkeit $\lambda$ der Luft, somit

$$q = \lambda * (dT/dx)_{x=0}$$

Somit gilt

$$\lambda * (dT/dx)_{x=0} = h_c (T_O - T_U)$$

Die Lösung der obigen Differentialgleichung lautet $T_x - T_U = (T_O - T_U)e^{-x/d}$

Dabei ist d die Temperaturgrenzschichtdicke. An der Stelle x = d gilt definitionsgemäß

$$T_d = (T_O - T_U)/e + T_U$$

Dabei ist e die Eulerschsche Zahl (2,718). In Worten gesprochen handelt es sich bei der Grenzschichtdicke um die Dicke, nach der die Temperaturdifferenz $(T_O - T_U)$ auf den 1/eten Teil abgefallen ist.

Durch weitere Rechnungen, die hier nicht mit allen Zwischenschritten dargestellt sind, ergibt sich

$$h_c = \lambda \ln ((T_O - T_U)/(T_x - T_U)) / x$$

Die Rechnungen zeigen also auf, dass die Temperaturdifferenz von der Konvektionsfläche in die Umgebung exponentiell abnimmt.

Für die vorliegende Anwendung ist vor allem interessant, dass es, wie oben bereits erwähnt, genügt die Temperaturdifferenz von der Konvektionsfläche zur Umgebung, genauer gesagt zur Umgebungsfluidtemperatur und die Temperaturdifferenz von einem Ort im Nahbereich der Konvektionsfläche zur Umgebungsfluidtemperatur zu ermitteln, um den konvektiven Wärmeübergangskoeffizienten zu bestimmen. Zur Berechnung ist es lediglich noch erforderlich den Abstand vom Ort im Nahbereich zur Konvektionsfläche zu kennen. Dieser Abstand ist in obiger Gleichung mit x bezeichnet.

Dabei ist zu beachten, dass es nicht erforderlich ist, die jeweiligen Absolut-Temperaturen zu erfassen. Es genügt tatsächlich eine Bestimmung der Temperaturdifferenzen.

In vielen Fällen ist die Temperatur der Konvektionsfläche höher als die Temperatur des Umgebungsfluids. In diesen Fällen könnte auch von einer Wärmeabgabefläche gesprochen werden. Es ist aber ebenso möglich, dass die Temperatur der Konvektionsfläche niedriger ist als die Temperatur des Umgebungsfluids. Daher wird allgemein vom konvektiven Wärmeübergang zwischen einer Konvektionsfläche und der Umgebung, genauer gesagt dem Umgebungsfluid gesprochen. Es kann sich also um einen konvektiven Wärmeübergang von der Konvektionsfläche an die Umgebung handeln, wobei es sich ebenso um den konvektiven Wärmeübergang von der Umgebung an die Konvektionsfläche handeln kann. Die zugrunde liegenden Überlegungen und physikalischen Gesetzmäßigkeiten sind in beiden Fällen gleich.

Wie später noch deutlich wird, wird im Regelfall tatsächlich die Temperatur an einem Punkt oder genauer gesagt in einem kleinen Bereich der Konvektionsfläche gemessen. Da der Wärmewiderstand von der Konvektionsfläche an die Umgebung im Regelfall sehr viel höher ist als der Wärmewiderstand in der Konvektionsfläche, ist die Temperatur der Konvektionsfläche im Normalfall insoweit hinreichend homogen.

Der Begriff Konvektionsfläche wird gewählt, um darzustellen, dass es sich um eine Fläche handelt, die durch konvektiven Wärmeübergang Wärme abgeben oder aufnehmen kann. Dies ist freilich im Grunde bei jeder Fläche der Fall und keine besondere Eigenschaft der Fläche. Der Begriff soll lediglich der anschaulichen und unmissverständlichen Darstellung dienen.

An dieser Stelle soll auf einen wichtigen Punkt hingewiesen werden. Je nach Art der Konvektionsfläche, genauer gesagt abhängig vom Absorptionsgrad für thermische Strahlung, kann die Konvektionsfläche auch durch Wärmestrahlung Wärme an die Umgebung abgeben oder von der Umgebung aufnehmen. Es ist darauf zu achten, dadurch nicht die Bestimmung des konvektiven Wärmeübergangskoeffizienten zu verfälschen. Es ist daher oft wichtig, dass die Messung der Umgebungsfluidtemperatur und die Messung der Temperatur im Nahbereich nicht durch Strahlung von der Konvektionsfläche relevant beeinflusst sind. Dies kann dadurch erreicht werden, dass verwendete Messstellen für die Temperatur - ggf. einschließlich dorthin führender Zuleitungen und dergleichen - einen niedrigen Absorptionsgrad für thermische Strahlung aufweisen, so dass kein relevanter Strahlungsaustausch mit der Konvektionsfläche erfolgt.

Es ist aber auch klar herauszustellen, dass bei entsprechender Ausgestaltung der Messstellen die Konvektionsfläche einen hohen Absorptionsgrad für thermische Strahlung haben darf. Vollständigkeitshalber sei darauf hingewiesen, dass der Absorptionsgrad und der Emissionsgrad stets übereinstimmen.

In einer Ausführungsform sind zur Bestimmung der Temperaturdifferenzen Thermoelemente vorhanden. Thermoelemente sind als Massenware verbreitet und damit preisgünstig erhältlich. Die Bestimmung absoluter Temperaturen kann sich mitunter aufwändig gestalten. Die Bestimmung relativer Temperaturdifferenzen ist aber mit Thermoelementen sehr einfach und genau möglich. Wegen der Bedeutung soll kurz die Funktionsweise eines Thermoelements dargestellt werden. Es ist ein erster Draht aus einem ersten Material vorhanden. An den beiden Enden ist der erste Draht mit je einem weiteren Draht aus zweitem Material verlötet. Bei geeigneter Wahl der Materialien, verbreitet ist Konstantan und Kupfer, ergibt sich eine von der Temperaturdifferenz zwischen den beiden Lötstellen abhängige Spannung. Diese Spannung kann von einem Messgerät erfasst werden. Aus der Spannung kann durch Nutzung einer Tabelle oder einer spezifischen Rechenvorschrift auf die Temperaturdifferenz geschlossen werden.

Anstelle eines Thermoelements kann etwa auch ein Widerstandsthermometer verwendet werden. Geeignet wäre etwa ein Pt100 Widerstandsthermometer, bevorzugt in Vierleitertechnik. Möglich ist es weiterhin Daten, etwa gemessene Thermospannungen, drahtlos zu übermitteln.

Vorteilhaft an der Messung mit Thermoelementen ist auch, dass problemlos relativ lange Zuleitungen verwendet werden können, ohne dass die Messgenauigkeit etwa durch einen Zuleitungswiderstand beeinträchtigt wird. Bei Widerstandsthermometern kann der Zuleitungswiderstand zu einer Verfälschung führen, es sei denn es wird Vierleitertechnik genutzt.

Thermoelemente haben auch noch einen weiteren Vorteil. Die sich ergebende Thermospannung ist proportional zur Temperaturdifferenz. Betrachtet man nochmals die Gleichung

$$h_c = \lambda \ \ln\left((T_O - T_U)/(T_x - T_U)\right) \ / \ x$$

so wird klar, dass ein Proportionalitätsfaktor, über den Temperaturdifferenz und Thermospannung verbunden sind, herausfällt. Soweit also zwei gleiche Thermoelemente verwendet werden, können in obige Gleichung anstelle der Temperaturdifferenzen auch die gemessenen Thermospannungen eingesetzt werden.

Diese Betrachtungen gelten für jegliche Messgeräte, deren Signal proportional zur gemessenen Temperaturdifferenz ist. Es kann unmittelbar das gemessenen Signal in die Gleichung eingesetzt werden. Eine Kalibration ist mithin nicht erforderlich, solange sich der Proportionalitätsfaktor nicht ändert, wie dies bei zwei gleichen Thermoelementen der Fall ist.

Falls freilich die tatsächliche konvektive Wärmeabgabe oder Wärmeaufnahme zu bestimmen ist, muss die tatsächliche Temperaturdifferenz gemessen werden. Die Absolut-Temperaturen müssen wie bereits erwähnt nicht ermittelt werden. Es genügt aber die Temperaturdifferenz zu kennen.

Die konvektive Wärmeabgabe oder Wärmeaufnahme ist definitionsgemäß das Produkt aus konvektivem Wärmeübergangskoeffizient $h_c$ mit der Temperaturdifferenz zwischen Oberflächentemperatur und Umbungstemperatur. Dies gilt allerdings nur insoweit, als die Messung der Temperaturdifferenz nicht durch Strahlungswärmeaustausch verfälscht ist. Eben aus diesem Grund wird auf die Umgebungsfluidtemperatur, die von der Strahlung nicht beeinflusst ist, abgestellt. Wie oben dargestellt kann es wichtig sein, die im Strahlungsaustausch mit der Konvektionsfläche stehenden Flächen der Lötstellen in der Umgebung und im Nahbereich mit einem niedrigen Absorptionsgrad für thermische Strahlung auszubilden. Dies gilt besonders bei einer Konvektionsfläche mit hohem Absorptionsgrad für thermische Strahlung.

In einer Ausführungsform weisen die Thermoelemente je zwei Lötstellen auf, wobei die beiden Lötstellen eines Thermoelements mit einem ersten Draht verbunden sind und von den beiden Lötstellen weitere Drähte zu einem Spannungsmessgerät abgehen. Dabei sind die Drähte, die von zwei Lötstellen mit derselben Temperatur abgehen, elektrisch kurzgeschlossen. Dies soll nachfolgend näher erläutert werden. Bei den verbreiteten Thermoelementen, die Drähte aus Kupfer und Konstantan aufweisen, sind normalerweise die Lötstellen mit dem Konstantandraht verbunden, während von den Lötstellen Kupferdrähte abgehen.

Wie oben ausgeführt, soll die Temperaturdifferenz zwischen dem Nahbereich der Konvektionsfläche und der Umgebung, also der Umgebungsfluidtemperatur, sowie zwischen der Konvektionsfläche und der Umgebung bestimmt werden. Erfolgt dies mit Thermoelementen sind zwei Thermoelemente vorhanden, bei denen jeweils eine Lötstelle in der Umgebung angeordnet ist. Die von diesen in der Umgebung liegenden Lötstellen zum Spannungsmessgerät abgehenden Drähte können kurzgeschlossen werden. Damit kann ein Kupferdraht eingespart werden.

In einer Ausführungsform hat der Nahbereich einen Abstand von 1 mm bis 3 mm, bevorzugt etwa 2 mm zur Konvektionsfläche. Dieser Abstand hat sich als geeignet herausgestellt, da einerseits eine hinreichende Temperaturdifferenz besteht und andererseits der Abstand niedrig genug ist, dass die Temperatur merklich vom konvektiven Wärmeübergang von der Konvektionsfläche oder an die Konvektionsfläche beeinflusst ist.

In einer Ausführungsform der Erfindung ragt von der Konvektionsfläche ein Stift oder eine stiftartige Anordnung -im weiteren wird verkürzt von "Stift" gesprochen - in die Umgebung, um die Lötstelle im Nahbereich und die Lötstellen in der Umgebung anzuordnen. Auf diese Weise ist es sehr einfach möglich, die Lötstellen an den thermodynamisch gewünschten Stellen anzuordnen.

Wichtig ist dabei, dass der Stift eine niedrige Wärmeleitfähigkeit aufweist, um die Temperaturverhältnisse nicht zu beeinflussen, wodurch die Messung verfälscht würde. Ferner ist darauf zu achten, dass der Stift einen niedrigen Absorptionsgrad für Sonnenstrahlung und einen niedrigen Absorptionsgrad für thermische Strahlung aufweist. Es genügt im Regelfall, wenn der Stift zwei Zentimeter von der Konvektionsfläche in die Umgebung ragt. Dort herrscht Umgebungsfluidtemperatur, so dass dort eine Lötstelle angebracht werden kann. Die andere Lötstelle ist wie erwähnt im Nahbereich anzuordnen. Es versteht sich, dass ein niedriger Absorptionsgrad für Sonnenstrahlung nur dann von Bedeutung ist, wenn der Stift der Sonne ausgesetzt sein kann. Darüber hinaus ist darauf zu achten, dass die Lötstellen von dem Stift möglichst thermisch entkoppelt sind.

Der Stift sollte nicht zu lang sein, etwa 2 cm genügen. Damit ist auch der Einbau in beengten Geometrien möglich. Zudem kann eine Beeinflussung der Strömung des Fluids minimiert werden.

7        EP 3 446 087 B1        8

Wie weiter oben dargestellt kann es wichtig sein, die im Strahlungsaustausch mit der Konvektionsfläche stehenden Flächen des Stifts mit einem niedrigen Absorptionsgrad für thermische Strahlung auszubilden. Dies gilt besonders bei einer Konvektionsfläche mit hohem Absorptionsgrad für thermische Strahlung.

In einer Ausführungsform der Erfindung ist eine Ausnehmung vorhanden, um zu den Lötstellen führende Drähte aufzunehmen. Damit kann eine sichere Anordnung der Drähte und der Lötstellen erreicht werden.

In einer Ausführungsform der Erfindung verläuft eine Ausnehmung längs des Stifts, bevorzugt in dessen Mitte, und mindestens eine Ausnehmung quer zum Stift im Bereich der anzuordnenden Lötstellen. Es ist damit möglich, die zu den Lötstellen führenden Drähte und zwischen den Lötstellen verlaufenden Drähte in diesen Ausnehmungen zu führen.

Achtet man bei der Führung der Drähte und der Anordnung der Lötstellen darauf, dass die Lötstellen ein wenig, beispielsweise einen Millimeter aus dem Stift herausragen, kann man in einfacher Weise eine thermische Entkopplung von Stift und Lötstelle erreichen. Zugleich wird sichergestellt, dass die Lötstelle die Temperatur der Luft an diesem Punkt annimmt.

Die Lötstelle zum Erfassen der Umgebungstemperatur kann auch am Ende des Stifts, selbstverständlich an dem der Konvektionsfläche abgewandten Ende, angeordnet werden. Dies einfach dadurch, dass die Lötstelle am Ende der längs des Stifts verlaufenden Ausnehmung angeordnet ist. Damit kann eine möglichst hohe Entfernung der Lötstelle zum Erfassen der Umgebungstemperatur bei gleichzeitig niedriger Höhe des Stifts erreicht werden. Damit wird die Beeinflussung der Strömung minimiert.

In einer Ausführungsform ist eine Abstandshalteanordnung vorhanden, wobei die Abstandshalteanordnung aus einem Körper gebildet wird, der eine Anschlussfläche zum Anschließen an die Konvektionsfläche aufweist und im Übrigen von einer Abstandsfläche umschlossen wird, wobei die Abstandsfläche einen im Nahbereich liegenden Nahabstandsbereich aufweist, und einen Fernabstandsbereich aufweist, bei dem Umgebungsfluidtemperatur vorliegt.

Die Abstandshalteanordnung kann dabei grundsätzlich eine beliebige Form haben. Die Anschlussfläche sollte freilich eine Form haben, die zur Konvektionsfläche passt. Die Anschlussfläche dient ja zum Anschließen der Abstandshalteanordnung an die Konvektionsfläche. Die Abstandsfläche ist - freilich unter Berücksichtigung nachstehender Ausführungen - beliebig gestaltet. Dabei ist die Abstandsfläche naturgemäß gekrümmt gestaltet und/oder weist mehrere Teilflächen auf. Unter der Abstandsfläche sollen all jene Umschließungsflächen des Körpers, der die Abstandshalteanordnung bildet, verstanden werden, die nicht zur Anschlussfläche gehören.

Es ist klar, dass die räumliche Ausdehnung der Abstandshalteanordnung niedrig sein muss, um die zu messenden Verhältnisse möglichst wenig zu beeinflussen. So wird der Querschnitt längs der Konvektionsfläche im Regelfall 1 bis 2 cm betragen.

In einer Ausführungsform ist die Abstandsfläche so geformt, dass der von der Abstandshalteanordnung hervorgerufene Luftwiderstand niedrig ist. Wenngleich dies nicht zwingend ist, ist dies im Regelfall aus mehreren Gründen sinnvoll. Ein niedriger Luftwiderstand bedeutet zugleich auch eine niedrige Beeinflussung der Strömung. Da wie später ausgeführt, die Strömung massiv den zu messenden konvektiven Wärmeübergangskoeffizienten beeinflussen kann, ist es wichtig die Strömung des Fluids an der Konvektionsfläche möglichst wenig zu beeinflussen.

Ferner geht ein niedriger Luftwiderstand auch mit einer niedrigeren Kraft auf die Abstandshalteanordnung einher, so dass die Gefahr einer Ablösung der Abstandshalteanordnung oder die Anforderungen an die Befestigung reduziert sind.

In einer Ausführungsform hat die Abstandshalteanordnung die Form eines Keils oder eines Pylons. Derartige Ausführungsformen sind hinsichtlich einfacher Herstellbarkeit, niedrigem Luftwiderstand und guten Möglichkeiten für die Messung sinnvoll.

In einer Ausführungsform ist im Nahabstandsbereich und/oder im Fernabstandsbereich eine zur Konvektionsfläche führende Ausnehmung vorhanden. Wie später noch näher dargestellt und im Zusammenhang mit dem oben geschilderten Stift bereits erwähnt, kann durch die Ausnehmung ein Draht geführt werden, so dass Thermoelemente zur Bestimmung der Temperaturdifferenzen eingesetzt werden können.

In einer Ausführungsform ist die Abstandsfläche zumindest teilweise mit einer leitfähigen Metallschicht versehen. Sofern zur Bestimmung der Temperaturdifferenzen Thermoelemente verwendet werden, kann die Metallschicht als eines der beiden Metalle der Thermoelemente eingesetzt werden. In besonderer Weise kommt eine Metallschicht aus Konstantan in Betracht. Konstantan eignet sich wie bereits weiter oben ausgeführt zur Bildung von Thermoelementen mit den Partnern Kupfer und Konstantan. Konstantan kann - wie andere Metalle auch - etwa durch einen Sputterprozess aufgebracht werden. Zur Bildung eines Thermoelements genügt dann das entsprechende Verlöten mit Kupferdrähten.

In einer im Grunde bereits genannten Ausführungsform ist durch die jeweilige Ausnehmung ein Draht geführt, der mit der Metallschicht verlötet ist, so dass eine Lötstelle eines Thermoelements gebildet ist. Damit kann auf sehr einfache Weise ein Aufbau bereitgestellt werden, mit dem Temperaturdifferenzen bestimmt werden können.

In einer Ausführungsform ist auf der Metallschicht eine elektrisch isolierende Schicht aufgebracht. Damit wird erreicht, dass keine Verfälschung der Messung etwa durch einen Kurzschluss der beiden Lötstellen durch Regenwasser hervorgerufen wird.

In einer Ausführungsform weist die Abstandshalteanordnung eine so niedrige Wärmeleitung auf, dass keine merkliche Beeinflussung der Temperatur an der Abstandsfläche aufgrund von Wärmeleitung durch die Abstandshalteanordnung erfolgt. Es versteht sich, dass eine gewisse Wärmeleitung nie zu vermeiden ist. Es ist nur darauf zu achten, dass dadurch keine merkliche Beeinflussung der Temperatur an der Abstandsfläche hervorgerufen wird.

In einer Ausführungsform beträgt im Fernabstandsbereich der Abstand zur Konvektionsfläche etwa 1 cm und im Nahabstandsbereich etwa 1 mm bis 3mm, bevorzugt 2 mm. Diese Abstände haben sich als sinnvoll erwiesen.

Die obigen Ausführungen hinsichtlich eines niedrigen Absorptionsgrads für Sonnenstrahlung und für thermische Strahlung zum Stift gelten für die Abstandshalteanordnung sinngemäß.

Die Erfindung betrifft auch ein in dem Anspruch 11 definiertes Verfahren zur Bestimmung des konvektiven Wärmeübergangskoeffizienten von einer Konvektionsfläche.

Durch die Bestimmung des konvektiven Wärmeübergangskoeffizienten kann ohne weiteres auch die konvektive Wärmeaufnahme oder Wärmeabgabe, also der konvektive Wärmestrom bestimmt werden, indem der bestimmte konvektive Wärmeübergangskoeffizient mit der Temperaturdifferenz von der Konvektionsfläche zur Umgebung multipliziert wird.

Die oben beschriebene Vorrichtung und/oder das beschriebene Verfahren können verwendet werden, um aus dem konvektiven Wärmeübergangskoeffizienten Geschwindigkeit und/oder Turbulenz einer Strömung an der Konvektionsfläche zu bestimmen, insbesondere ob eine laminare oder turbulente Strömung vorliegt. Da der konvektive Wärmeübergangskoeffizient von der Geschwindigkeit der Strömung abhängig ist, ist es möglich durch Bestimmung des konvektiven Wärmeübergangskoeffizienten die Strömungsgeschwindigkeit zu ermitteln.

Da der konvektive Wärmeübergangskoeffizient bei einer turbulenten Strömung deutlich höher ist als bei einer laminaren Strömung ist es insbesondere möglich zu bestimmen, ob die Strömung laminar oder turbulent ist. Diese Unterscheidung ist in vielen Fällen wichtig. Aufgrund der deutlichen Unterschiede des konvektiven Wärmeübergangskoeffizienten bei laminarer oder turbulenter Strömung kann dabei oftmals darauf verzichtet werden, den Wärmeübergangskoeffizienten selbst genau zu bestimmen.

Es ist beispielsweise möglich, mehrere Stifte oder mehrere Abstandshalteanordnungen in Strömungsrichtung hintereinander anzuordnen. Damit kann der Umschlagpunkt von einer laminaren zu einer turbulenten Strömung bestimmt werden.

Bei einem Windrad ist die Geschwindigkeit der Strömung, also zumeist die Windgeschwindigkeit, sowie die Frage ob Turbulenzen auftreten, vielfach von hoher Bedeutung für die Regelung. Daher kann das oben beschriebene Verfahren sowie die Vorrichtung zur Regelung von Windrädern genutzt werden. So kann der Anstellwinkel abhängig von Windgeschwindigkeit und/oder auftretenden Turbulenzen eingestellt werden.

Eine Strömung, die zumindest teilweise längs einer Fläche strömt, führt durch die Reibung zwischen Fluid und Fläche zu einer Scherkraft. Die Scherkraft hängt von der Geschwindigkeit der Strömung ab. Zudem hängt die Scherkraft entscheidend davon ab, ob die Strömung laminar oder turbulent ist.

Wie aus der Literatur bekannt sind bei einer umströmten Konvektionsfläche das Temperaturprofil und das Geschwindigkeitsprofil identisch. Dies führt dazu, dass der konvektive Wärmeübergangskoeffizient und die Scherkraft, also die von der Strömung durch Reibung auf die Konvektionsfläche ausgeübte Kraft proportional sind. Die Bestimmung des konvektiven Wärmeübergangskoeffizienten gestattet daher in einfacher Weise eine Bestimmung der Scherkraft.

Die Erfindung betrifft auch eine strömungsbelastete Fläche, insbesondere die Fläche eines Windrads oder Flugzeugs, enthaltend eine oben beschriebene Vorrichtung, so dass die Strömungsbelastung, insbesondere die Scherkraft, der Fläche ermittelt werden kann. In vielen Fällen, gerade bei Windrädern oder Flugzeugen, ist die Strömungsbelastung, also die von der Strömung hervorgerufene Scherkraft von hohem Interesse. Durch eine strömungsbelastete Fläche, die eine oben beschriebene Vorrichtung enthält, kann die Strömungsbelastung wie dargelegt in einfacher Weise ermittelt werden.

**Ausführungsbeispiel**

Anhand eines Ausführungsbeispiels sollen weitere Einzelheiten dargestellt werden.

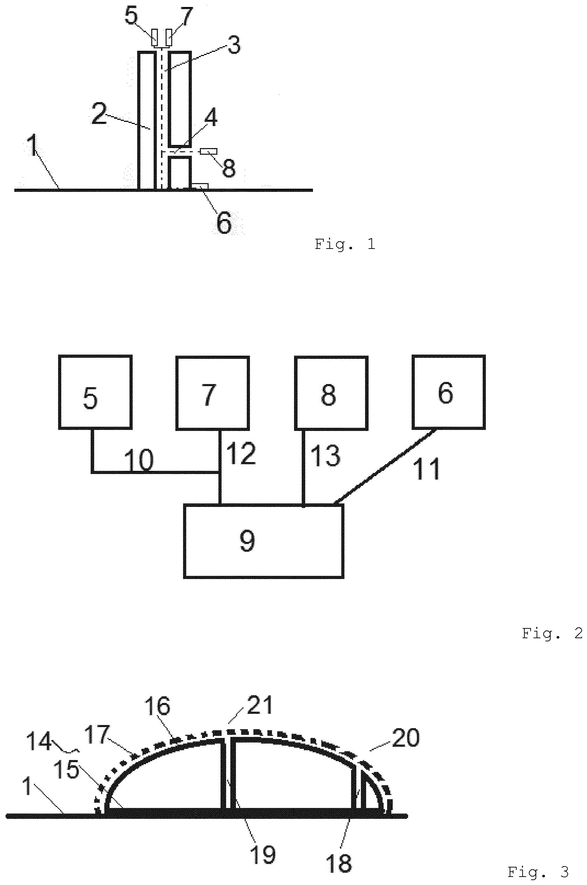

Dabei zeigt Fig. 1 eine Skizze eines Messaufbaus mit den angeordneten Thermoelementen und Fig. 2 eine schematische Darstellung der Lötstellen und den davon wegführenden Kupferdrähten.

Fig. 3 zeigt eine Abstandshalteanordnung.

An einer Fläche, die als Konvektionsfläche 1 dient, ist ein Stift 2 aus Polyamid befestigt. Der Stift 2 ist etwa 2 cm lang und hat einen Durchmesser von wenigen Millimetern. Der Stift 2 ist in der Mitte aufgebohrt, so dass sich die Bohrung 3 ergibt. Zudem ist eine seitliche Bohrung 4 vorhanden, so dass Drähte aus der Bohrung 3 geführt werden können. Am oberen des Stifts 2 können aus der Bohrung 3 direkt Drähte herausgeführt werden.

Die Anordnung erlaubt es eine erste Lötstelle 5 eines ersten Thermoelements am oberen Ende der Bohrung 3 anzuordnen. Die zweite Lötstelle 6 des ersten Thermoelements befindet sich an der Konvektionsfläche 1 neben oder unter dem Fußpunkt des Stifts 2.

Am oberen Ende der Bohrung 3 ist zudem eine erste Lötstelle 7 eines zweiten Thermoelements angeordnet. Die zweite Lötstelle 8 des zweiten Thermoelements befindet sich neben der Bohrung 4.

Die Drähte zu den Thermoelementen verlaufen durch die Bohrungen 3 und 4 zu den Lötstellen 5, 6, 7 und 8. Die Zuleitungen sind in den Bohrungen insoweit gehalten, dass dadurch eine gewisse Fixierung der Lötstellen erfolgt. Damit werden diese nahe an dem Stift 2 gehalten, wobei dennoch eine thermische Entkopplung zwischen Stift 2 und Lötstellen 5, 7 und 8 erreicht wird.

Die seitliche Bohrung 4 hat einen Abstand von 2 mm von der Konvektionsfläche 1. Die Lötstelle 8 liegt somit in einem Nahbereich, der derart nahe der Konvektionsfläche 1 liegt, dass die Temperatur der Lötstelle 8 von der Konvektionsfläche 1 merklich durch Konvektion beeinflusst ist.

Das obere Ende der Bohrung 3 hat einen Abstand von 2 cm von der Konvektionsfläche 1. Die Lötstellen 5 und 7 sind somit so weit weg von der Konvektionsfläche 1, dass dort Umgebungsfluidtemperatur herrscht.

Die Temperaturdifferenz zwischen der Oberflächentemperatur der Konvektionsfläche und Umgebungsfluidtemperatur ist also die Temperaturdifferenz zwischen den Lötstellen 5 und 6 des ersten Thermoelements.

Die Temperaturdifferenz zwischen einer Temperatur im Nahbereich der Konvektionsfläche und der Umgebungsfluidtemperatur ist entsprechend die Temperaturdifferenz zwischen den Lötstellen 7 und 8 des zweiten Thermoelements.

Die verwendeten Thermoelemente weisen einen Konstantandraht zwischen den Lötstellen auf. An den Lötstellen sind jeweils Kupferdrähte mit dem Konstantandraht verlötet. Die Kupferdrähte führen von den Lötstellen weg.

Figur 2 zeigt schematisch die Verdrahtung der Thermoelemente mit einem Spannungsmessgerät 9. Ein Kupferdraht 10 führt von der ersten Lötstelle 5 des ersten Thermoelements zum Spannungsmessgerät 9. Ein weiterer Kupferdraht 11 führt von der zweiten Lötstelle 6 des ersten Thermoelements zum Spannungsmessgerät 9. Von der ersten Lötstelle 7 des zweiten Thermoelements führt ein Kupferdraht 12 zum Spannungsmessgerät 9. Wie ersichtlich können die Kupferdrähte 10 und 12 zusammengeführt werden, also elektrisch kurzgeschlossen werden. Damit kann ein Kupferdraht eingespart werden. Schließlich führt ein Kupferdraht 13 von der zweiten Lötstelle 8 des zweiten Thermoelements zum Spannungsmessgerät 9. Im

Spannungsmessgerät 9 können die Spannungen zwischen den Lötstellen 5 und 6 sowie 7 und 8 gemessen werden. Aus den ermittelten Spannungen kann auf die Temperaturdifferenzen geschlossen werden. Hierzu kann zuvor eine Kalibration des Thermoelements vorgenommen werden oder es können Daten des Herstellers genutzt werden. Wie weiter oben dargestellt, kann auf die Kalibration der Thermoelemente auch verzichtet werden, da bei gleichen Thermoelementen unmittelbar die erhaltenen Spannungswerte zur Berechnung des konvektiven Wärmeübergangskoeffizienten $h_c$

genutzt werden können.

Figur 3 zeigt beispielhaft eine schematisch dargestellte Abstandshalteanordnung 14. Diese ist auf der Konvektionsfläche 1 angebracht. Der Querschnitt beträgt etwa 2 cm. Es ist eine Anschlussfläche 15 zu erkennen. Mit dieser liegt die Abstandshalteanordnung 14 unmittelbar an der Konvektionsfläche 1 auf. Im Übrigen ist die Abstandshalteanordnung von einer Abstandsfläche 16 umgeben. Auf der Abstandsfläche 16 ist eine Konstantanschicht 17 aufgebracht, zumeist aufgesputtert.

Es ist eine erste Ausnehmung 18 und eine zweite Ausnehmung 19 vorhanden. Die erste Ausnehmung 18 endet an der Abstandsfläche 16 in einem Nahabstandsbereich 20, der 1 mm bis 2 mm von der Konvektionsfläche 1 entfernt ist. Die zweite Ausnehmung 19 endet an der Abstandsfläche 16 in einem Fernabstandsbereich 21, der etwa 1 cm von der Konvektionsfläche 1 entfernt ist.

Durch die Ausnehmungen 18 und 19 können aus Übersichtlichkeitsgründen nicht dargestellte Kupferdrähte geführt werden. Durch ein Verlöten mit der Konstantanschicht können Lötstellen geschaffen werden. Im Übrigen erfolgen der Messaufbau und die Messung wie beim oben beschriebenen Stift. Zur Vermeidung von Wiederholungen wird darauf verwiesen.

Bezugszeichenliste

| 1 | Konvektionsfläche |
| 2 | Stift |
| 3 | mittlere Bohrung |
| 4 | untere seitliche Bohrung |
| 5 | erste Lötstelle des ersten Thermoelements |
| 6 | zweite Lötstelle des ersten Thermoelements |
| 7 | erste Lötstelle des zweiten Thermoelements |
| 8 | zweite Lötstelle des zweiten Thermoelements |
| 9 | Spannungsmessgerät |
| 10 | Kupferdraht von Lötstelle 5 |
| 11 | Kupferdraht von Lötstelle 6 |
| 12 | Kupferdraht von Lötstelle 7 |
| 13 | Kupferdraht von Lötstelle 8 |
| 14 | Abstandshalteanordnung |
| 15 | Anschlussfläche |
| 16 | Abstandsfläche |
| 17 | Konstantanschicht |
| 18 | erste Ausnehmung |
| 19 | zweite Ausnehmung |
| 20 | Nahabstandsbereich |
| 21 | Fernabstandsbereich |

**Patentansprüche**

1. Vorrichtung zur Bestimmung des konvektiven Wärmeübergangskoeffizienten an einer Konvektionsfläche (1), wobei eine erste Temperaturdifferenz zwischen der Oberflächentemperatur der Konvektionsfläche (1) und der Umgebungsfluidtemperatur und eine zweite Temperaturdifferenz zwischen einer Temperatur im Nahbereich (4, 20) der Konvektionsfläche (1) und der Umgebungsfluidtemperatur bestimmbar sind, wobei der Nahbereich (4, 20) derart nahe der Konvektionsfläche (1) liegt, dass die Temperatur von der Konvektionsfläche (1) durch Konvektion merklich beeinflusst ist.

2. Vorrichtung nach Anspruch 1, **dadurch gekennzeichnet, dass** zur Bestimmung der Temperaturdifferenzen Thermoelemente (5, 6, 7, 8) vorhanden sind.

3. Vorrichtung nach Anspruch 2, **dadurch gekennzeichnet, dass** die Thermoelemente je zwei Lötstellen (5, 6, 7, 8) aufweisen, wobei die beiden Lötstellen (5, 6, 7, 8) eines Thermoelements mit einem ersten Draht verbunden sind und von den beiden Lötstellen (5, 6, 7, 8) weitere Drähte (10, 11, 12, 13) zu einem Spannungsmessgerät (9) abgehen, wobei die Drähte (10, 12), die von zwei Lötstellen (5, 7) mit derselben Temperatur abgehen, elektrisch kurzgeschlossen sind.

4. Vorrichtung nach einem der vorhergehenden Ansprüche, **dadurch gekennzeichnet, dass** der Nahbereich (4) einen Abstand von 1 mm bis 3 mm, bevorzugt etwa 2 mm, zur Konvektionsfläche (1) hat.

5. Vorrichtung nach einem der vorhergehenden Ansprüche, **dadurch gekennzeichnet, dass** eine Abstandshalteanordnung (14) vorhanden ist, wobei die Abstandshalteanordnung (14) aus einem Körper gebildet wird, der eine Anschlussfläche (15) zum Anschließen an die Konvektionsfläche (1) aufweist und im Übrigen von einer Abstandsfläche (16) umschlossen wird, wobei die Abstandsfläche (16) einen im Nahbereich liegenden Nahabstandsbereich (20) aufweist, und einen Fernabstandsbereich (21) aufweist, bei dem Umgebungsfluidtemperatur vorliegt.

6. Vorrichtung nach Anspruch 5, **dadurch gekennzeichnet, dass** die Abstandshalteanordnung (14) die Form eines Keils oder eines Pylons hat.

7. Vorrichtung nach einem der Ansprüche 5 bis 6, **dadurch gekennzeichnet, dass** im Nahabstandsbereich (20) und/oder im Fernabstandsbereich (21) eine zur Konvektionsfläche (1) führende Ausnehmung (18, 19) vorhanden ist.

8. Vorrichtung nach einem der Ansprüche 5 bis 7, **dadurch gekennzeichnet, dass** die Abstandsfläche (16) zumindest teilweise mit einer leitfähigen Metallschicht (17) versehen ist.

9. Vorrichtung nach dem vorhergehenden Anspruch, **dadurch gekennzeichnet, dass** durch die jeweilige Ausnehmung (18, 19) ein Draht (10, 12, 13) geführt ist, der mit der Metallschicht (17) verlötet ist, so dass eine Lötstelle (5, 7, 8) eines Thermoelements gebildet ist.

10. Vorrichtung nach einem der Ansprüche 5 bis 9, **dadurch gekennzeichnet, dass** im Fernabstandsbereich (21) der Abstand zur Konvektionsfläche (1) etwa 1 cm beträgt und im Nahabstandsbereich (20) etwa 1 mm bis 3 mm, bevorzugt etwa 2 mm, beträgt.

11. Verfahren zur Bestimmung des konvektiven Wärmeübergangskoeffizienten an einer Konvektionsfläche (1), wobei eine erste Temperaturdifferenz zwischen der Oberflächentemperatur der Konvektionsfläche (1) und der Umgebungsfluidtemperatur und eine zweite Temperaturdifferenz zwischen einer Temperatur im Nahbereich (4) der Konvektionsfläche (1) und der Umgebungsfluidtemperatur bestimmt wird, wobei der Nahbereich (4) derart nahe der Konvektionsfläche (1) liegt, dass die Temperatur von der Konvektionsfläche (1) durch Konvektion merklich beeinflusst ist.

12. Verwendung des Verfahrens und/oder der Vorrichtung nach einem der Ansprüche 1 bis 11 zur Bestimmung der Geschwindigkeit und/oder Turbulenz einer Strömung an der Konvektionsfläche (1).

13. Verwendung des Verfahrens und/oder der Vorrichtung nach einem der Ansprüche 1 bis 11 zur Regelung einer Windkraftanlage.

14. Verwendung des Verfahrens und/oder der Vorrichtung nach einem der Ansprüche 1 bis 11 zur Bestimmung der Scherkraft.

15. Strömungsbelastete Fläche, insbesondere Fläche eines Windrads oder Flugzeugs, enthaltend eine Vorrichtung nach einem der Ansprüche 1 bis 10, so dass die Strömungsbelastung, insbesondere die Scherkraft, der Fläche ermittelt werden kann.

## Claims

1. Device for determining the convective heat transfer coefficient at a convection surface (1), wherein a first temperature difference between the surface temperature of the convection surface (1) and the surrounding fluid temperature and a second temperature difference between a temperature in the near region (4, 20) of the convection surface (1) and the surrounding fluid temperature can be determined, wherein the near region (4, 20) lies so close to the convection surface (1) that the temperature is noticeably influenced by the convection surface (1) by convection.

2. Device according to Claim 1, **characterized in that** thermocouples (5, 6, 7, 8) are present for determining the temperature differences.

3. Device according to Claim 2, **characterized in that** the thermocouples each have two soldering points (5, 6, 7, 8), wherein the two soldering points (5, 6, 7, 8) of a thermocouple are connected to a first wire and further wires (10, 11, 12, 13) extend from the two soldering points (5, 6, 7, 8) to a voltage measuring device (9), wherein the wires (10, 12) that extend from two soldering points (5, 7) at the same temperature are electrically short-circuited.

4. Device according to one of the preceding claims, **characterized in that** the near region (4) is at a distance of 1 mm to 3 mm, preferably approximately 2 mm, from the convection surface (1).

5. Device according to one of the preceding claims, **characterized in that** a distance maintaining arrangement (14) is present, the distance maintaining arrangement (14) being formed by a body that has a connecting surface (15) for connecting to the convection surface (1) and is otherwise enclosed by a spacing surface (16), wherein the spacing surface (16) has a near spacing region (20) lying in the near region, and a far spacing region (21), which is at the surrounding fluid temperature.

6. Device according to Claim 5, **characterized in that** the distance maintaining arrangement (14) takes the form of a wedge or a pylon.

7. Device according to either of Claims 5 and 6, **characterized in that** a clearance (18, 19) leading to the convection surface (1) is present in the near spacing region (20) and/or in the far spacing region (21) .

8. Device according to one of Claims 5 to 7, **characterized in that** the spacing surface (16) is at least partially provided with a conductive metal layer (17).

9. Device according to the preceding claim, **characterized in that** a wire (10, 12, 13), which is soldered to the metal layer (17) so as to form a soldering point (5, 7, 8) of a thermocouple, is led through the respective clearance (18, 19).

10. Device according to one of Claims 5 to 9, **characterized in that** in the far spacing region (21) the distance from the convection surface (1) is approximately 1 cm and in the near spacing region (20) it is approximately 1 mm to 3 mm, preferably approximately 2 mm.

11. Method for determining the convective heat transfer coefficient at a convection surface (1), wherein a first temperature difference between the surface temperature of the convection surface (1) and the surrounding fluid temperature and a second temperature difference between a temperature in the near region (4) of the convection surface (1) and the surrounding fluid temperature is determined, wherein the near region (4) lies so close to the convection surface (1) that the temperature is noticeably influenced by the convection surface (1) by convection.

12. Use of the method and/or the device according to one of Claims 1 to 11 for determining the velocity and/or turbulence of a flow at the convection surface (1).

13. Use of the method and/or the device according to one of Claims 1 to 11 for controlling a wind turbine.

14. Use of the method and/or the device according to one of Claims 1 to 11 for determining the shear force.

15. Surface subjected to flow, in particular surface of a wind wheel or aircraft, including a device according to one of Claims 1 to 10, so that the flow load, in particular the shear force, on the surface can be determined.

## Revendications

1. Dispositif de détermination du coefficient de transfert thermique convectif sur une surface de convection (1), une première différence de température entre la température de surface de la surface de convection (1) et la température de fluide ambiante et une deuxième différence de température entre une température dans la zone proche (4, 20) de la surface de convection (1) et la température de fluide ambiante pouvant être déterminées, la zone proche (4, 20) étant proche de la surface de convection (1) au point que la température de la surface de convection (1) est notablement influencée par la convection.

2. Dispositif selon la revendication 1, **caractérisé en ce que** des thermocouples (5, 6, 7, 8) sont prévus pour déterminer les différences de température.

3. Dispositif selon la revendication 2, **caractérisé en ce que** les thermocouples comportent chacun deux joints de soudure (5, 6, 7, 8), les deux joints de soudure (5, 6, 7, 8) d'un thermocouple étant reliés à un premier fil et d'autres fils (10, 11, 12, 13) partant des deux joints de soudure (5, 6, 7, 8) en direction d'un dispositif de mesure de tension (9), les fils (10, 12), qui partent de deux joints de soudure (5, 7) à la même température, étant court-circuités électriquement.

**4.** Dispositif selon l'une des revendications précédentes, **caractérisé en ce que** la zone proche (4) est à une distance de 1 mm à 3 mm, de préférence d'environ 2 mm, de la surface de convection (1).

**5.** Dispositif selon l'une des revendications précédentes, **caractérisé en ce qu'**un ensemble d'espacement (14) est prévu, l'ensemble d'espacement (14) étant formé à partir d'un corps qui comporte une surface de raccordement (15) destinée à se raccorder à la surface de convection (1) et qui est par ailleurs enfermé par une surface d'espacement (16), la surface d'espacement (16) présentant une zone de distance proche (20) située dans la zone proche, et une zone de distance éloignée (21) dans laquelle la température de fluide ambiante est présente.

**6.** Dispositif selon la revendication 5, **caractérisé en ce que** l'ensemble d'espacement (14) a la forme d'un coin ou d'un pylône.

**7.** Dispositif selon l'une des revendications 5 à 6, **caractérisé en ce qu'**un évidement (18, 19), menant à la surface de convection (1), est ménagé dans la zone de distance proche (20) et/ou dans la zone de distance éloignée (21).

**8.** Dispositif selon l'une des revendications 5 à 7, **caractérisé en ce que** la surface d'espacement (16) est au moins partiellement pourvue d'une couche métallique conductrice (17).

**9.** Dispositif selon la revendication précédente, **caractérisé en ce qu'**un fil (10, 12, 13) est guidé à travers l'évidement respectif (18, 19) et est soudé à la couche métallique (17) de façon à former un joint de soudure (5, 7, 8) d'un thermocouple.

**10.** Dispositif selon l'une des revendications 5 à 9, **caractérisé en ce que**, dans la zone de distance éloignée (21), la distance à la surface de convection (1) est d'environ 1 cm et, dans la zone de distance proche (20), elle est d'environ 1 mm à 3 mm, de préférence d'environ 2 mm.

**11.** Procédé de détermination du coefficient de transfert de chaleur par convection sur une surface de convection (1), une première différence de température entre la température de surface de la surface de convection (1) et la température de fluide ambiante et une deuxième différence de température entre une température dans la zone proche (4) de la surface de convection (1) et la température de fluide ambiante étant déterminées, la zone proche (4) étant proche de la surface de convection (1) au point que la température de la surface de convection (1) est notablement influencée par la convection.

**12.** Utilisation du procédé et/ou du dispositif selon l'une des revendications 1 à 11 pour déterminer la vitesse et/ou la turbulence d'un écoulement à la surface de convection (1).

**13.** Utilisation du procédé et/ou du dispositif selon l'une des revendications 1 à 11 pour régler une éolienne.

**14.** Utilisation du procédé et/ou du dispositif selon l'une des revendications 1 à 11 pour déterminer la force de cisaillement.

**15.** Surface soumis à contrainte d'écoulement, notamment surface d'une éolienne ou d'un aéronef, contenant un dispositif selon l'une des revendications 1 à 10, de façon à pouvoir déterminer la contrainte d'écoulement, notamment la force de cisaillement, de la surface.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013206406 A1
- US 4653934 A
- DD 244199 B3
- US 20040136434 A1
- GB 2395561 A
- EP 0025049 A1
- EP 1684065 A1
- EP 2530443 A2